# FASCICULE DE BREVET EUROPEEN

(11) **EP 2 390 128 B1**
(45) Date de publication et mention de la délivrance du brevet: **23.05.2012**
(21) Numéro de dépôt: 11167344.8
(22) Date de dépôt: 24.05.2011
(51) Int. Cl.: B60K 15/00, B60K 15/04, B60R 25/10

(54) **Système de contrôle d'un volume embarqué dans un réservoir**
System zur Kontrolle eines in einem Tank befindlichen Volumens
System to controle the volume stored in a tank

(30) Priorité: 31.05.2010 FR 1054215
(43) Date de publication de la demande: 30.11.2011
(73) Titulaire: Eboo Development, 07700 Bourg-Saint- Andéol (FR); Ingeflu, 67170 Brumath (FR)
(72) Inventeur: Cabiron, Jean-Louis, René, Emile, 07700, BOURG-ST-ANDEOL (FR); Bertucci, Dominique, 67350, LA WALCK (FR)
(74) Mandataire: Thinat, Michel

(56) Documents cités:
- DE-C1- 19 834 671
- FR-A1- 2 798 645
- FR-A1- 2 934 213
- GB-A- 2 433 999

## Description

L'invention concerne un système de contrôle du bon usage d'un liquide lors du remplissage et à partir d'un réservoir destiné à contenir ce liquide.

Le détournement d'un liquide hors de l'usage auquel il est initialement destiné, peut avoir des conséquences désastreuses, tant en termes économiques qu'en termes d'assurance de bon fonctionnement des appareils auxquels la fourniture de ce liquide est nécessaire. C'est notamment le cas lorsque le liquide est un carburant approvisionné spécifiquement pour propulser un véhicule déterminé.

Dans l'état de la technique, il y a déjà au moins une solution proposée pour lutter contre un tel fléau. En effet, le document FR-A-2 934 213 divulgue un dispositif anti-siphonage pour éviter la préemption de liquide dans un réservoir.

Un système de contrôle comprenant les caractéristiques du préambule de la revendication 1 est connu du document FR 2 798 645 A1.

De façon classique, le retrait et la fermeture d'un bouchon de réservoir peuvent être détectés.

Cependant, de tels systèmes n'apportent pas entière satisfaction car ils supposent que le détournement d'usage résulte uniquement d'une ponction du liquide dans le réservoir qui le contient. Ils sont donc basés sur un remplissage préalable de la totalité du liquide approvisionné dans le réservoir de destination. De nombreux problèmes subsistent, notamment lorsque tout ou partie du liquide approvisionné, donc facturé, est dévié de sa destination sans même avoir été introduit dans le réservoir.

L'invention a pour but de remédier aux problèmes présentés ci avant.

De manière à atteindre ce but, l'invention a pour objet un système de contrôle d'un volume de liquide embarqué dans un réservoir relié à un dispositif de détection d'un bouchon dont l'ouverture permet d'introduire le liquide dans le réservoir, un module électronique agencé pour enregistrer au moins un volume de liquide embarqué dans le réservoir entre un instant d'ouverture et un instant de fermeture du bouchon qui succède à l'instant d'ouverture, un moyen de mesure du volume de liquide embarqué, relié au module électronique, et une chambre intermédiaire disposée en aval du bouchon et par laquelle passe le liquide qui est introduit dans le réservoir.

Selon l'invention, ledit moyen de mesure comprend un débitmètre qui indique le volume de liquide passant entre la chambre intermédiaire et le réservoir.

La présente invention concerne également les caractéristiques supplémentaires suivantes, considérées isolément ou en combinaison :
- le moyen de mesure comprend une pompe volumétrique qui indique le volume de liquide introduit dans le réservoir en passant par la chambre intermédiaire,
- la chambre intermédiaire comprend une jauge de détection de niveau bas et de premier niveau haut reliée au module électronique et le module électronique est configuré pour permettre au liquide de passer de la chambre au réservoir après atteinte du premier niveau haut tant que le niveau bas n'est pas atteint,
- le réservoir comprend une jauge de détection de deuxième niveau haut reliée au module électronique et le module électronique est configuré pour interdire au liquide de passer de la chambre au réservoir lorsque le deuxième niveau haut est atteint,
- ladite chambre intermédiaire est agencée dans un boîtier extérieur au réservoir ou intégré dans le réservoir si celui-ci est réalisé spécifiquement pour cette utilité, et reliée au réservoir par une conduite sécurisée pour faire passer le liquide de la chambre intermédiaire au réservoir,
- le module électronique est agencé pour enregistrer chaque instant d'ouverture et chaque instant de fermeture du bouchon,
- le module électronique est agencé pour transmettre les données enregistrées lors des ouvertures et fermetures du bouchon.

D'autres caractéristiques, détails et avantages de la présente invention apparaîtront au cours de la description explicative qui va suivre et qui est faite en référence aux dessins schématiques annexés donnés uniquement à titre d'exemple illustrant un mode de réalisation de l'invention et dans lesquels :
- la figure 1 montre la démarche habituelle de gestion de l'alimentation en carburant d'un véhicule ;
- la figure 2 est un schéma de dispositif conforme à l'invention ; et
- la figure 3 est un ordinogramme de procédé conforme à l'invention.

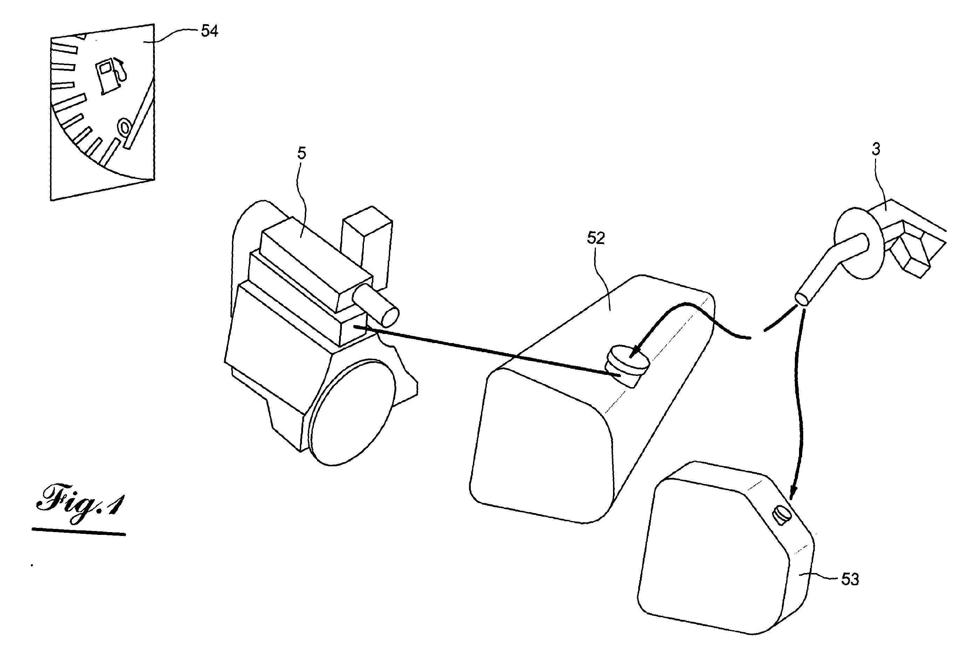

La figure 1 illustre une rupture de la chaîne de contrôle entre les volumes livrés qui sont répertoriés sur la facturation et les volumes effectivement mis dans un réservoir 52 d'un camion. Il est vrai que des instruments embarqués 54 permettent de mesurer les performances d'un moteur 5 en termes de consommation de carburant, par exemple en fonction des volumes consommés et des distances parcourues. Cependant, l'exactitude des volumes embarqués n'est pas certaine. Un étalonnage (en anglais : benchmark) par cette approche est inapproprié.

Les calculs sont généralement basés sur des volumes théoriques embarqués identifiés par les relevés de facturation et des distances réelles parcourues. Il y a un biais car l'exactitude des volumes théoriques embarqués n'est pas certaine. Il existe alors un risque en ce que le calcul de consommation en litres aux 100 km soit biaisé.

Une source importante de productivité pourrait venir du contrôle des volumes de carburant effectivement embarqués ou introduits dans les réservoirs. Après avoir travaillé sur les habitudes de conduites et les économies de carburants qui peuvent être suivies par les informations embarquées et renforcées par les moniteurs ou les formateurs de conduite, les inventeurs ont noté qu'il reste une grande incertitude liée à la rupture de la chaîne de contrôle lors de la réalisation des pleins de carburants.

Les volumes payés ne sont pas forcément introduits dans les réservoirs 52, par exemple en retirant momentanément le pistolet 3 d'une station service hors du réservoir 52 pour l'introduire dans un réservoir d'un autre véhicule ou dans un récipient annexe 53. Il en résulte un risque d'augmenter les coûts variables. Les inventeurs ont élaboré une stratégie de lutte contre ce risque. Alors que des optimisations de l'ordre du pourcent sont engagées dans le domaine de la gestion des flottes de camions, la stratégie élaborée promet un ordre de grandeur d'optimisation bien supérieur au pourcent.

Une première vérification a permis de noter qu'aucun système connu n'est actuellement opérationnel pour mettre en place la stratégie élaborée.

Il existe un besoin de système vérifiant l'exacte quantité de carburant embarqué à chaque plein en tenant compte de la difficulté de mesurer les carburants de par leur volatilité en raison de la température, de la pression et de leur nature inflammable.

De façon à mesurer exactement les volumes embarqués et à les comparer à ceux mentionnés sur les montants facturés en volumes, nous décrivons à présent un système de contrôle de remplissage d'un réservoir avec un liquide conforme à l'invention. Le système reprend la détection de l'ouverture du bouchon permettant d'introduire le liquide dans le réservoir, et un module électronique agencé pour enregistrer un volume de liquide introduit dans le réservoir entre un instant d'ouverture et un instant de fermeture du bouchon qui succède à l'instant d'ouverture.

Le système décrit est capable de vérifier que le carburant est bien introduit dans le réservoir du véhicule et non transféré dans un autre réservoir tout en étant facturé sur le même compte, de mesurer avec exactitude les volumes embarqués, d'enregistrer ces informations en plus d'autres liés aux pleins effectués dont l'heure et la date, et de transférer ces données dans des terminaux appropriés qui permettent de comparer les données embarquées à celles facturées.

On notera que le système de l'invention permet de contrôler non seulement d'autres causes de détournement d'usage du liquide que le siphonage, à savoir une orientation frauduleuse du liquide vers un autre récipient que le réservoir de destination lors de l'opération de remplissage elle-même.

Il permet également d'empêcher le siphonage en ne laissant accès, à l'ouverture du bouchon, qu'à une chambre intermédiaire de faible volume et vide.

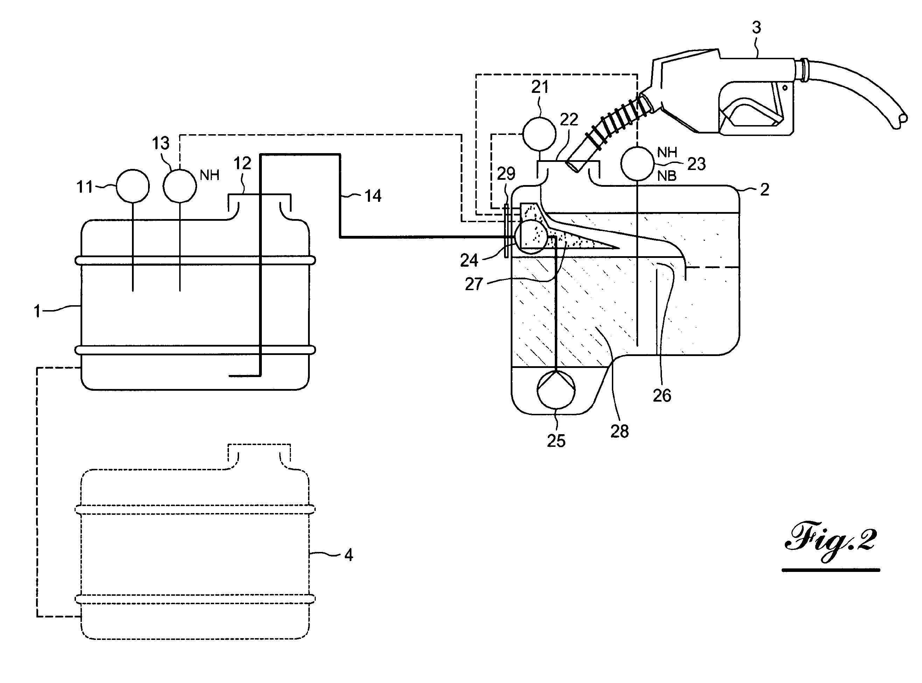

La figure 2 montre un boîtier 2 de remplissage externe à un réservoir principal 1. Le boîtier 2 comprend une chambre intermédiaire 28 de faible volume, un bouchon 22 avec détection d'ouverture par un capteur 21 et une jauge 23 de contrôle de remplissage à détection de niveau haut NH et de niveau bas NB.

Un tube 14 protégé relie le boîtier 2 de remplissage au réservoir principal 1 en passant à travers un bouchon 12 existant du réservoir principal 1. Le tube 14 de liaison est blindé sous forme de tube double enveloppe en acier épais. Les raccords sont inaccessibles et invisibles. Dans le cas par exemple où le réservoir de liquide est un réservoir de camion destiné à contenir du gasoil, les raccords sont cachés dans les structures du camion.

Dans une variante de réalisation non représentée, la chambre intermédiaire 28 est intégrée dans le réservoir de sorte que le boîtier 2 extérieur au réservoir n'est pas nécessaire pour contenir la chambre intermédiaire. Le tube 14 n'est alors lui aussi plus nécessaire. Le bouchon 12 du réservoir que l'on peut alors ouvrir et fermer librement, joue dans cette variante le rôle du bouchon 22 lié à l'existence du boîtier 2.

Le boîtier 2, installé à proximité du réservoir, présente l'avantage de pouvoir mettre en oeuvre l'invention sur un réservoir existant sans avoir à modifier le réservoir sauf à faire passer le tube 14 à travers le bouchon 12 et à verrouiller l'ouverture du bouchon 12 de façon à interdire un accès direct au réservoir 1.

Une pompe 25 est prévue pour transférer le liquide de la chambre 28 au réservoir 1 par la conduite 14.

Lorsque le réservoir 1 principal est couplé à un réservoir 4 complémentaire, l'accès au réservoir 4 est interdit, notamment par verrouillage d'un éventuel bouchon du réservoir 4 complémentaire, quelque soit le mode de réalisation choisi, de façon à garder le contrôle de l'utilisation du liquide introduit dans les réservoirs.

Un module électronique 27 de gestion comprend une horloge qui permet d'horodater les événements gérés et un calculateur qui permet de calculer la quantité de liquide, notamment de gasoil introduite pour aboutir à une quantité finale à partir d'une quantité initiale de liquide contenu dans le réservoir.

Le module électronique 27 comprend aussi une mémoire permettant de stocker la date et l'heure d'ouverture du réservoir, la date et l'heure de fermeture du réservoir et la quantité de liquide, par exemple de gasoil introduite en association avec la date et l'heure d'introduction du liquide dans le réservoir.

Le module électronique 27 comprend de plus un dispositif de transmission permettant la lecture des valeurs enregistrées, à proximité du réservoir, par exemple du camion au moyen d'une liaison filaire ou préférentiellement d'une liaison sans fil basée par exemple sur la norme IEEE 802.15.1 souvent nommée Bluetooth, sur la norme IEEE 802.15.4 souvent nommée Zigbee ou sur la norme IEEE 802.11 souvent nommée WiFi. On peut envisager une lecture à distance des données enregistrées au moyen d'une liaison radio basée par exemple sur la norme IEEE 802.16 souvent nommée WiMax ou sur les normes de communication cellulaires telles que GSM, UMTS ou ultérieures.

L'alimentation électrique du module électronique 24 est assurée par une pile, par une batterie de véhicule, notamment de camion après coupure du contact ou par un panneau solaire associé à une batterie autonome.

Le module électronique 27 est relié au capteur 21, à la jauge 23 et à une jauge de contrôle de remplissage du réservoir principal. La jauge de contrôle de remplissage du réservoir principal est par exemple la jauge 11 installée de base dans le réservoir pour communiquer le contenu en temps réel du réservoir à un tableau de bord ou à un ordinateur de bord de véhicule, auquel cas il faut prévoir entre la sonde 11 et le module électronique 27, éventuellement via l'ordinateur de bord du véhicule, un lien qui reste actif lorsque le contact du véhicule est coupé.

De préférence, la jauge de contrôle de remplissage du réservoir principal est une jauge 13 à détection de niveau haut NH, spécialement installée dans le réservoir pour signaler au module électronique 27 un état plein du réservoir.

Le module électronique est équipé d'une trappe d'accès 29 inviolable (en anglais : tamper-resistant ou tamper-proof) pour empêcher la fraude.

Le système de l'invention peut être réalisé en différentes configurations qui peuvent être utilisées séparément ou en combinaison.

Une première configuration consiste à équiper le module électronique 27 avec un compteur de liquide, notamment de gasoil, qui met par exemple en oeuvre un débitmètre 24 installé sur la conduite 14 en sortie de la chambre intermédiaire 28. Une mesure par comptage en sortie de pompe 25 permet une précision d'environ ± 1%.

Une deuxième configuration consiste à équiper le système avec une pompe 25 de nature volumétrique. La connaissance du débit assuré par la pompe volumétrique, permet alors de calculer le volume de liquide transféré en multipliant le débit par le temps de fonctionnement de la pompe volumétrique. Cette méthode de mesure permet une précision d'environ ± 3%.

Chaque configuration se suffit à elle seule. En combinaison, les deux configurations permettent de se vérifier l'une et l'autre.

La mesure de débit par comptage volumétrique permet de s'affranchir des variations de pression et de température, notamment lorsque le liquide est du gasoil, prompt à s'évaporer. La mesure de débit par comptage volumétrique permet aussi de s'affranchir d'une légère déclivité du camion lors du remplissage comme nous le verrons par la suite.

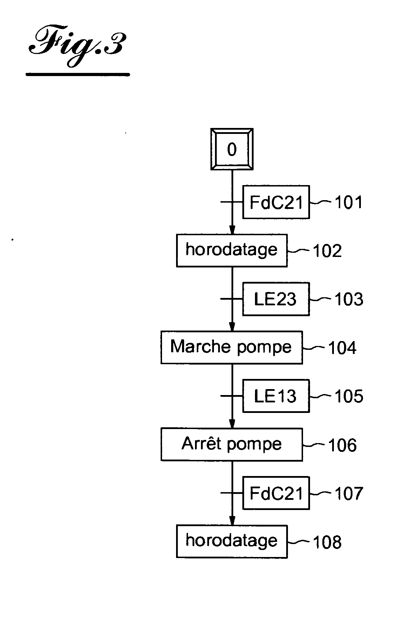

Le module électronique 27 est câblé et/ou contient notamment des instructions de programme exécutables par une unité de traitement arithmétique et logique de façon à mettre en oeuvre le procédé expliqué à présent en référence à la figure 3.

Le procédé de contrôle de remplissage d'un réservoir avec un liquide, comprend :
- une transition initiale 101 validée par une détection d'ouverture d'un bouchon qui permet d'introduire le liquide dans le réservoir ;
- une étape 104 d'introduction du liquide dans le réservoir, activée après validation de la transition 101 ;
- une transition finale 107 validée par une détection de fermeture du bouchon ;
- une étape 108 d'enregistrement d'un volume de liquide introduit dans le réservoir entre une validation de la transition initiale 101 et une validation de la transition finale 107 qui succède à la validation de la transition initiale 101.

Les détections d'ouverture et de fermeture se font de façon classique, tel que cela est fait aujourd'hui par exemple au moyen d'un capteur 21 de type fin de course FdC.

Dans l'étape 104 d'introduction du liquide dans le réservoir, on mesure le volume de liquide introduit dans le réservoir.

Pour mesurer le volume de liquide introduit dans le réservoir, on peut envisager d'utiliser une jauge 11 disposée dans le réservoir 1 de manière à relever continûment le niveau de liquide dans le réservoir. En relevant le niveau de liquide donné par la jauge 11 à l'instant de validation de la transition initiale 101 puis à l'instant de validation de la transition finale 107. La connaissance d'une relation géométrique du réservoir associant un volume de liquide contenu dans le réservoir à un niveau relevé, permet alors d'estimer le volume introduit en soustrayant le volume associé au niveau initial du volume associé au niveau final.

Le bouchon dont on détecte l'ouverture et la fermeture peut alors être directement le bouchon 12 du réservoir lui-même.

Dans le cas où le réservoir est un réservoir de véhicule, notamment de véhicule utilitaire, destiné à contenir du gasoil, si la jauge 11 est suffisamment précise, on peut espérer obtenir une estimation équivalente à une mesure lorsque le véhicule est sur un plan horizontal de référence pour lequel il est possible de déterminer la relation géométrique d'association entre niveau et volume. Cependant, l'estimation peut être faussée lorsque le véhicule est sur un plan incliné sauf à connaître une loi de variation de la relation géométrique en fonction de l'inclinaison du véhicule et à pouvoir mesurer l'inclinaison du véhicule. On remarque qu'une telle version du procédé devient rapidement complexe.

On préfère faire passer le liquide dans une chambre intermédiaire disposée en aval du bouchon.

Le passage du liquide de la chambre intermédiaire au réservoir peut se faire par gravité ou au moyen d'une pompe 25 qui est alors mise en marche dans l'étape 104.

Lorsqu'une pompe est utilisée pour faire passer le liquide de la chambre intermédiaire au réservoir, la pompe est mise en marche dès que le niveau de liquide dans la chambre intermédiaire atteint un premier niveau haut NH qui est détecté par une jauge de type LE (Level Evaluation en anglais) 23 située dans la chambre intermédiaire et qui valide une transition 103 préalable à l'activation de l'étape 104. Dans l'étape 104, la pompe est arrêtée si un niveau bas NB est détecté par la jauge et redémarrée lorsque le premier niveau haut NH est à nouveau détecté de sorte que la marche de la pompe est maintenue après atteinte du premier niveau haut tant que le niveau bas n'est pas atteint.

Une transition 105 est validée lorsqu'une jauge 33 située dans le réservoir, signale un deuxième niveau haut NH au module électronique.

Une validation de la transition 105 active une étape 106 qui provoque un arrêt de la pompe de façon à interdire au liquide de passer de la chambre au réservoir lorsque le niveau du réservoir ou deuxième niveau haut est atteint.

La chambre intermédiaire permet de mesurer le volume de liquide introduit dans le réservoir au cours de l'étape 104 de différentes manières.

Dans l'étape 104, on peut mesurer le volume de liquide introduit au moyen d'un débitmètre 24 qui indique le volume de liquide passant de la chambre intermédiaire au réservoir.

Si on utilise une pompe, une utilisation de pompe volumétrique indique le volume de liquide qui est extrait de la chambre intermédiaire par la pompe volumétrique pour être introduit dans le réservoir.

La transition 101 active une étape 102 pour enregistrer l'instant, notamment la date et l'heure d'ouverture du bouchon 22.

A la suite de l'étape 106, une transition 107 est validée par une détection de fermeture du bouchon dont l'ouverture a permis d'introduire le liquide dans le réservoir.

Une validation de la transition 107 active une étape 108 dans laquelle le module électronique enregistre l'instant, notamment la date et l'heure de fermeture du bouchon 22.

Dans l'étape 108, le module électronique 27 enregistre aussi le volume finalement mesuré de liquide introduit dans le réservoir au cours de l'étape 104 et transmet les données enregistrées lors de l'ouverture et de la fermeture du bouchon 22.

A titre illustratif, on décrit à présent comment le système de la figure 2 et le procédé de la figure 3 fonctionnent lorsqu'ils sont utilisés pour contrôler le remplissage d'un réservoir de gasoil de camion.

Lorsque le chauffeur ouvre le bouchon du système, le module électronique enregistre l'opération en y associant sa date et son heure.

La pompe 25 se met automatiquement en service dès que le niveau dans la chambre 28 est suffisant, généralement immédiatement dès l'ouverture du bouchon sur le reliquat de gasoil dans la chambre qui résulte d'un remplissage précédent.

On notera que le démarrage immédiat de la pompe dès l'ouverture du bouchon s'oppose efficacement à une tentative de siphonage, même d'un éventuel reliquat de liquide restant dans le boîtier 2 à la suite d'un remplissage précédent, en transférant le reliquat dans le réservoir. La pompe 25 en série avec le tube 14 s'oppose quasiment totalement à l'introduction d'un tube souple de siphonage par le bouchon 22 jusqu'au réservoir 1. L'introduction du tube souple par le bouchon 12 est rendu impossible par le verrouillage du bouchon 12.

Le chauffeur commence le remplissage comme à l'habitude en actionnant le pistolet 3 de la station service qui pénètre dans le boîtier 2.

Le liquide pénétrant dans le boîtier 2 atteint la chambre 28 à travers une ouverture 26 dans une paroi qui assure un niveau minimal de liquide pour faire fonctionner la pompe.

La pompe 25 transfère automatiquement le gasoil en continu vers le ou les réservoirs 1, 4.

Quand le ou les réservoirs 1, 4 sont pleins, la pompe 25 s'arrête automatiquement.

Le chauffeur continuant à actionner le pistolet 3, remplit la chambre 28. La livraison s'arrête seule comme avec les réservoirs traditionnels lorsque le dispositif de sécurité du pistolet 3 détecte un trop plein dans le boîtier 2 qui résulte de l'arrêt de la pompe 25.

Lorsque le chauffeur referme le bouchon du système, le module électronique enregistre l'opération en y associant sa date et son heure.

La quantité de gasoil transférée est enregistrée, avec la date et l'heure de l'opération.

Le système et le programme numérique de mise en oeuvre du procédé que nous venons de décrire, est configuré de manière remarquable pour détecter toute ouverture et fermeture du bouchon 12 du réservoir ou 22 du boîtier, pour détecter l'opération de remplissage du réservoir lorsque le camion est à l'arrêt, et pour lancer l'activation du système.

Le système et le programme sont particulièrement configurés de manière à mesurer la quantité de liquide, notamment de gasoil ajoutée dans le réservoir en mesurant le volume de liquide avant remplissage et après remplissage ou en mesurant la quantité de liquide entrant, la préférence étant accordée à la seconde alternative qui intègre naturellement des caractéristiques physiques du liquide entrant identiques à celle du liquide sortant du pistolet 3 d'alimentation.

Le système et le programme sont de plus configurés de manière à procurer un enregistrement de la quantité de gasoil introduite dans le réservoir, un enregistrement automatique de l'ouverture et de la fermeture d'accès au réservoir et un enregistrement de la date et de l'heure des événements pertinents pour le remplissage du réservoir.

Le système et le programme sont enfin configurés de manière à transmettre automatiquement les données enregistrées, par exemple par l'intermédiaire d'une borne de lecture fixe ou par l'intermédiaire d'un lecteur mobile pilotés par le centre de gestion.

La configuration globale ainsi obtenue livre une information sur la quantité de liquide, notamment de carburant (essence, gaz oïl, kérosène...) qui est réellement mise dans les réservoirs lors de chaque plein réalisé dans les stations service. L'information livrée au centre de gestion peut alors être confrontée avec celle qui est enregistrée sur les tickets de caisses des prestataires (factures) telle que transmise aux centres de paiements et donc aux utilisateurs, notamment pour effectuer des calculs de consommation avec des caractéristiques de robustesse, de fiabilité, de confidentialité et de simplicité de fonctionnement remarquables.

Les caractéristiques techniques liées à la capture des données de volume, à la communication de ces données par moyens de transmission et à l'analyse des données reçues, notamment par comparaison avec des bases de facturations, permettent de vérifier que les volumes de carburants facturés sont bien introduites dans les réservoirs et non pas dans des bidons extérieurs par exemple.

Les caractéristiques techniques ci-dessus mentionnées permettent ainsi de limiter les tentations de détournement (vols) lors des opérations de remplissages de réservoirs.

Le procédé de mise en oeuvre du système conforme à l'invention, est neutre vis-à-vis des actions des conducteurs qui ne sont pas astreints à suivre une procédure particulière de remplissage lorsqu'ils effectuent des pleins de carburant.

Le fonctionnement simple et transparent, permet d'interfacer le système soit avec des programmes embarqués dans les véhicules, soit directement avec des programmes résidant sur une base déportée agencée pour comparer les données de la facturation (volume essentiellement) les données fournies par le système embarqué. Le système peut être intégré dans les réservoirs dès leur conception ou être ajouté séparément par l'adaptation d'un kit.

## Revendications

1. Système de contrôle d'un volume de liquide embarqué dans un réservoir (1), comprenant :
- un bouchon (22) dont l'ouverture permet d'introduire le liquide dans le réservoir (1),
- un capteur (21) de détection d'ouverture/fermeture du bouchon (22),
- un module électronique (27) agencé pour enregistrer au moins un volume de liquide embarqué dans le réservoir entre un instant d'ouverture et un instant de fermeture du bouchon (22) qui succède au dit instant d'ouverture,
- un moyen de mesure (13, 24, 25) du volume de liquide embarqué, relié au module électronique (27), **caractérisée en ce que** ledit moyen de mesure comprend
- une chambre intermédiaire (28) disposée en aval du bouchon (22) et par laquelle passe le liquide qui est introduit dans le réservoir (1), et
- un débitmètre (24) qui indique le volume de liquide passant entre la chambre intermédiaire (28) et le réservoir (1).

2. Système de contrôle selon la revendication 1, **caractérisé en ce que** ledit moyen de mesure comprend une pompe volumétrique (25) qui indique le volume de liquide introduit dans le réservoir (1) en passant par la chambre intermédiaire (28).

3. Système de contrôle selon la revendication 2, **caractérisé en ce que** la chambre intermédiaire (28) comprend une jauge (23) de détection de niveau bas (NB) et de premier niveau haut (NH) reliée au module électronique (27) et **en ce que** le module électronique (27) est configuré pour permettre au liquide de passer de la chambre intermédiaire (28) au réservoir (1) après atteinte du premier niveau haut tant que le niveau bas n'est pas atteint.

4. Système de contrôle selon l'une des revendications 1 à 3, **caractérisé en ce que** le réservoir (1) comprend une jauge (33) de détection de deuxième niveau haut (NH) reliée au module électronique (27) et **en ce que** le module électronique (27) est configuré pour interdire au liquide de passer de la chambre intermédiaire (28) au réservoir (1) lorsque le deuxième niveau haut est atteint.

5. Système de contrôle selon l'une des revendications 1 à 4, **caractérisé en ce que** ladite chambre intermédiaire (28) est dans un boîtier extérieur au réservoir (1) et relié au réservoir (1) par une conduite (14) sécurisée pour faire passer le liquide de la chambre intermédiaire (28) au réservoir (1).

6. Système de contrôle selon l'une des revendications précédentes, **caractérisé en ce que** le module électronique (27) est agencé pour enregistrer chaque instant d'ouverture et de fermeture du bouchon (22).

7. Système de contrôle selon l'une des revendications précédentes, **caractérisé en ce que** le module électronique (27) est agencé pour transmettre les données enregistrées lors des ouvertures et fermetures du bouchon (22).

## Claims

1. A system to control the volume of liquid stored in a tank (1), comprising:
- a stopper (22) whereof the opening makes it possible to introduce liquid into the tank (1),
- a sensor (21) for detecting the opening/closing of the stopper (22),
- an electronic module (27) arranged to record at least one volume of liquid stored in the tank between an opening moment and a closing moment of the stopper (22) that follows said opening moment,
- a means (13, 24, 25) for measuring the volume of liquid stored, connected to the electronic module (27),
- **characterized in that** said measuring means comprises an intermediate chamber (28) positioned downstream of the stopper (22) and through which the liquid introduced into the tank (1) passes, and
- a flow meter (24) that indicates the volume of liquid passing between the intermediate chamber (28) and the tank (1).

2. The control system according to claim 1, **characterized in that** said measuring means comprises a displacement pump (25) that indicates the volume of liquid introduced into the tank (1) passing through the intermediate chamber (28).

3. The control system according to claim 2, **characterized in that** the intermediate chamber (28) comprises a low level (NB) and high level (NH) detection gauge (23) connected to the electronic module (27) and **in that** the electronic module (27) is configured to allow the liquid to go from the intermediate chamber (28) to the tank (1) after reaching the first high level as long as the low level is not reached.

4. The control system according to one of claims 1 to 3, **characterized in that** the tank (1) comprises a gauge (33) for detecting a second high level (NH) connected to the electronic module (27) and **in that** the electronic module (27) is configured to prohibit the liquid from going from the intermediate chamber (28) to the tank (1) when the second high level is reached.

5. The control system according to one of claims 1 to 4, **characterized in that** said intermediate chamber (28) is in a case outside the tank (1) and connected to the tank (1) by a secured pipe (14) to make the liquid go from the intermediate chamber (28) to the tank (1).

6. The control system according to one of the preceding claims, **characterized in that** the electronic module (27) is arranged to record each opening and closing moment of the stopper (22).

7. The control system according to one of the preceding claims, **characterized in that** the electronic module (27) is arranged to transmit the recorded data upon openings and closings of the stopper (22).

## Patentansprüche

1. Kontrollsystem eines in einem Tank (1) befindlichen Flüssigkeitsvolumens, das umfasst:
- einen Deckel (22), dessen Öffnen erlaubt, die Flüssigkeit in den Tank (1) zu füllen,
- einen Sensor (21), der das Öffnen/Schließen des Deckels (22) feststellt,
- ein elektronisches Modul (27), das ausgebildet ist, um mindestens ein in dem Tank zwischen einem Moment des Öffnens und einem Moment des Schließens des Deckels (22), der dem Moment des Öffnens folgt, untergebrachtes Flüssigkeitsvolumen zu registrieren,
- ein Messmittel (13, 24, 25) des untergebrachten Flüssigkeitsvolumens, das mit dem elektronischen Modul (27) verbunden ist,
**dadurch gekennzeichnet, dass** das Messmittel umfasst:
- eine Zwischenkammer (28), die nach dem Deckel (22) angeordnet ist und durch die die Flüssigkeit läuft, die in den Tank (1) gefüllt wird, und
- einen Durchflussmesser (24), der das Flüssigkeitsvolumen angibt, das sich zwischen der Zwischenkammer (28) und dem Tank (1) bewegt.

2. Kontrollsystem nach Anspruch 1, **dadurch gekennzeichnet, dass** das Messmittel eine volumetrische Pumpe (25) umfasst, die das Flüssigkeitsvolumen anzeigt, das durch die Zwischenkammer (28) in den Tank (1) gefüllt wurde.

3. Kontrollsystem nach Anspruch 2, **dadurch gekennzeichnet, dass** die Zwischenkammer (28) ein Messinstrument (23) zur Feststellung eines niedrigen Niveaus (NB) und eines ersten hohen Niveaus (NH) umfasst, das mit dem elektronischen Modul (27) verbunden ist und dass das elektronische Modul (27) konfiguriert ist, um der Flüssigkeit zu erlauben, nach Erreichen des ersten hohen Niveaus von der Zwischenkammer (28) in den Tank (1) zu fließen, solange das niedrige Niveau nicht erreicht ist.

4. Kontrollsystem nach einem der Ansprüche 1 bis 3, **dadurch gekennzeichnet, dass** der Tank (1) ein Messinstrument (33) zur Feststellung eines zweiten hohen Niveaus (NH) umfasst, das mit dem elektronischen Modul (27) verbunden ist, und dass das elektronische Modul (27) konfiguriert ist, um der Flüssigkeit zu untersagen, von der Zwischenkammer (28) in den Tank (1) zu fließen, wenn das zweite hohe Niveau erreicht ist.

5. Kontrollsystem nach einem der Ansprüche 1 bis 4, **dadurch gekennzeichnet, dass** die Zwischenkammer (28) in einem Gehäuse außerhalb des Tanks (1) ist, das mit dem Tank (1) durch eine Leitung (14) verbunden ist, die gesichert ist, damit die Flüssigkeit aus der Zwischenkammer (28) in den Tank (1) fließt.

6. Kontrollsystem nach einem der vorangehenden Ansprüche, **dadurch gekennzeichnet, dass** das elektronische Modul (27) ausgebildet ist, um jeden Moment des Öffnens und des Schließens des Deckels (22) zu registrieren.

7. Kontrollsystem nach einem der vorangehenden Ansprüche, **dadurch gekennzeichnet, dass** das elektronische Modul (27) ausgebildet ist, um die beim Öffnen und Schließen des Deckels (22) registrierten Daten zu übertragen.
